(19) **Europäisches Patentamt / European Patent Office / Office européen des brevets**

(11) **EP 4 737 649 A1**

(12) **EUROPEAN PATENT APPLICATION**
published in accordance with Art. 153(4) EPC

(43) Date of publication:
06.05.2026 Bulletin 2026/19

(21) Application number: 24831484.1

(22) Date of filing: 21.05.2024

(51) International Patent Classification (IPC):
*E02F 9/00* (2006.01)   *H01M 10/44* (2006.01)
*H01M 10/48* (2006.01)   *H02J 7/10* (2006.01)

(52) Cooperative Patent Classification (CPC):
E02F 9/00; H01M 10/44; H01M 10/48; H02J 7/06

(86) International application number:
PCT/JP2024/018637

(87) International publication number:
WO 2025/004612 (02.01.2025 Gazette 2025/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 27.06.2023 JP 2023105373

(71) Applicant: **KUBOTA CORPORATION**
**Osaka-shi, Osaka 556-8601 (JP)**

(72) Inventor: **ITO, Junki**
**Sakai-shi, Osaka 590-0908 (JP)**

(74) Representative: **Cabinet Beau de Loménie**
**103, rue de Grenelle / CS 90800**
**75340 Paris Cedex 07 (FR)**

(54) **ELECTRIC WORK MACHINE AND METHOD FOR CONTROLLING ELECTRIC WORK MACHINE**

(57) To achieve, in an electric working machine, both shortening a charging time and holding down increases in the temperature of a battery according to the purpose of use.

An electric working machine (1) includes a battery assembly (30), an electric actuator (9) to be actuated by electricity supplied by the battery assembly, a working device (20) to be actuated by the electric actuator being driven, a temperature detector (31b, 31c, 31d, 32b, 32c, 32d) to detect a temperature of the battery assembly, and a controller (7) configured or programmed to control, according to the temperature of the battery assembly, a first upper limit ($I\_th1$) which is an upper limit of a charging current supplied to the battery assembly. The controller is configured or programmed to switch between (i) a first mode (M1) in which the controller controls the charging current based on a first correspondence relationship in which temperatures of the battery assembly and first upper limits are associated with each other, and (ii) a second mode (M2) in which the controller controls the charging current based on a second correspondence relationship in which the first upper limits are lower than in the first correspondence relationship at one or more of the temperatures.

Fig.7

(A)

S71 Switch mode

S72 Detect temperature of battery unit

S73 Acquire first upper limit $I\_th1$

S74 Charge

S75 Continue charging? — Yes

No

End

**Description**

Technical Field

The present invention relates to electric working machines each actuated by electricity of a battery assembly and methods of controlling electric working machines.

Background Art

Patent Literature 1 discloses an electric working machine including an electric motor, a battery assembly to supply electricity to the electric motor, a hydraulic pump driven by the electric motor to deliver hydraulic fluid, a hydraulic device driven by the hydraulic fluid, and a working device actuated by the hydraulic device. The electric working machine, when the battery assembly is running low, may perform fast charging using an external charger.

Citation List

Patent Literature

PTL 1: Japanese Unexamined Patent Application Publication No. 2021-80703

Summary of Invention

Technical Problem

However, the battery assembly may generate heat both during charging and discharging, and the high temperature may result in an increased possibility of deterioration. In particular, when performing the fast charging of the battery assembly using a fast charger, large current (for example, about 125 amperes at maximum) flows through the battery assembly. This makes it possible to charge the battery assembly in a relatively short time, but causes a significant increase in the temperature of the battery assembly. Furthermore, in the case of a working machine having the function to restrict performance when the temperature of the battery assembly is equal to or higher than a predetermined value, although the working machine can charge the battery assembly in a relatively short time by performing the fast charging, the working machine may restrict its performance until the temperature of the battery assembly decreases.

The present invention was made to solve the above issues in the related art, and it is an object of the present invention is to, in an electric working machine, achieve both shortening a charging time and holding down increases in the temperature of the battery, according to the purpose of use.

Solution to Problem

An electric working machine according to an example embodiment of the present invention includes a battery assembly, an electric actuator to be actuated by electricity supplied by the battery assembly, a working device to be actuated by the electric actuator being driven, a temperature detector to detect a temperature of the battery assembly, and a controller configured or programmed to control, according to the temperature of the battery assembly, a first upper limit which is an upper limit of a charging current supplied to the battery assembly, wherein the controller is configured or programmed to switch between (i) a first mode in which the controller controls the charging current based on a first correspondence relationship in which temperatures of the battery assembly and first upper limits are associated with each other, and (ii) a second mode in which the controller controls the charging current based on a second correspondence relationship in which the first upper limits are lower than in the first correspondence relationship at one or more of the temperatures.

The controller may be configured or programmed to lower the first upper limit as the temperature of the battery assembly increases in each of the first mode and the second mode.

The first upper limits of the second mode may be lower than the first upper limits of the first mode in a first temperature range of the temperatures of the battery assembly, and equal to or substantially equal to the first upper limits of the first mode in a second temperature range in which the temperatures of the battery assembly are higher than in the first temperature range.

The first upper limits in the first temperature range may be constant with respect to the temperatures of the battery assembly in at least one of the first mode or the second mode.

The controller may be configured or programmed to control an output of the working device according to the temperature of the battery assembly.

The controller may be configured or programmed to control a second upper limit which is an upper limit of a discharge current supplied from the battery assembly to the electric actuator according to the temperature of the battery assembly.

The controller may be configured or programmed to lower the second upper limit as the temperature of the battery assembly increases.

The electric working machine may further include a switch to switch between the first mode and the second mode.

A method of controlling an electric working machine, the electric working machine including a battery assembly, an electric actuator to be actuated by electricity supplied by the battery assembly, a working device to be actuated by the electric actuator being driven, a temperature detector to detect a temperature of the battery assembly, and a controller configured or programmed to control charging of the battery assembly, the method including a first step including selecting a first mode or a second mode, and a second step including controlling a first upper limit that is an upper limit of a charging current supplied to the battery assembly according to the first mode or the second mode selected in the first step and the temperature of the battery assembly, wherein the second step includes, when the first mode is selected, controlling the charging current based on a first correspondence relationship in which temperatures of the battery assembly and first upper limits are associated with each other, and, when the second mode is selected, controlling the charging current based on a second correspondence relationship in which the first upper limits are lower than in the first correspondence relationship at one or more of the temperatures.

Advantageous Effects of Invention

With the electric working machine, it is possible to give priority to shortening a charging time in the first mode, and give priority to holding down increases in the temperature of the battery assembly in the second mode, making it possible to achieve both shortening a charging time and holding down increases in the temperature of the battery assembly according to the purpose of use.

Brief Description of Drawings

[FIG. 1] FIG. 1 is an electrical block diagram of an electric working machine.

[FIG. 2] FIG. 2 illustrates a relationship between temperatures of a battery assembly and upper limits of discharge current (second upper limits).

[FIG. 3] FIG. 3 illustrates a process of a discharge control.

[FIG. 4] FIG. 4 illustrates a correspondence relationship between temperatures of a battery assembly and upper limits of charging current (first upper limits).

[FIG. 5] FIG. 5 illustrates examples of a data structure relating to upper limits of discharge current (first upper limits).

[FIG. 6] FIG. 6 illustrates an example of a switching screen.

[FIG. 7] FIG. 7 illustrates a process of a charge control.

[FIG. 8A] FIG. 8A illustrates a relationship between first weighting values and the lowest temperatures.

[FIG. 8B] FIG. 8B illustrates a relationship between the lowest temperatures, the highest temperatures, and first temperatures.

[FIG. 9] FIG. 9 illustrates a process of a display control.

[FIG. 10A] FIG. 10A illustrates an example of a display screen.

[FIG. 10B] FIG. 10B illustrates another example of a display screen.

[FIG. 11] FIG. 11 is a general side view of an electric working machine.

[FIG. 12] FIG. 12 illustrates a hydraulic circuit included in an electric working machine.

Description of Embodiments

The following discusses example embodiments of the present invention with reference to drawings. An electric working machine 1 of the present invention includes a battery assembly 30, an electric actuator 9 to be actuated by electricity supplied by the battery assembly 30, and a working device 20 to be actuated by the electric actuator 9 being driven. The following first discusses a general configuration of the electric working machine 1.

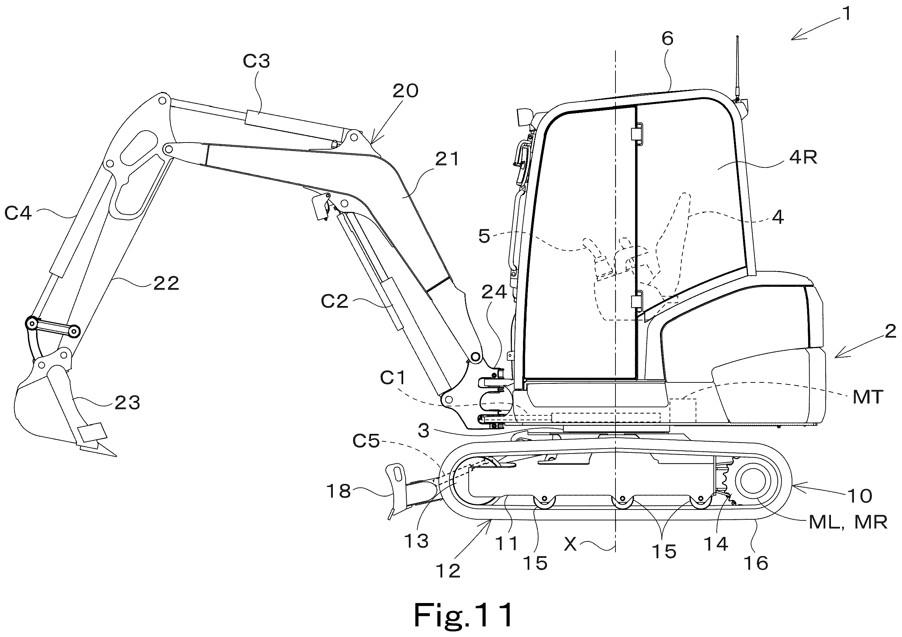

FIG. 11 is a general side view of the electric working machine 1. The electric working machine 1 is a backhoe, for example. The electric working machine 1 includes a machine body (swivel base) 2, a traveling device 10, a dozer device 18, a working device 20 and the like. The machine body 2 has provided thereon a seat 4 in which a user sits, and a protection structure (cabin) 6 to protect the front, rear, left, right, and upper sides of the seat 4.

A manual operator 5 to be used to operate the electric working machine 1 is provided in the vicinity of the seat 4 inside the protection structure 6 (cab 4R). The user can operate the manual operator 5 while sitting in the seat 4.

It is noted that the protection structure 6 is not limited to the cabin as shown in FIG. 11, and the protection structure 6 may be a two-pillar or a three-pillar cabin, or a canopy.

Travel mechanisms 12 are, for example, crawler traveling mechanisms. Each of the travel mechanisms 12 includes an idler 13, a driving wheel 14, a plurality of track rollers 15, an endless crawler belt 16, and a corresponding one of travel motors ML, MR.

The machine body 2 is supported by a travel frame 11 to be rotatable about a swivel axis X via a swivel bearing 3. A swivel motor MT is provided inside the machine body 2.

The working device 20 is supported at the front portion of the machine body 2. The working device 20 includes a boom 21, an arm 22, a bucket (working tool) 23, and hydraulic cylinders C1 to C5. The proximal end of the boom 21 is pivotally supported by a swing bracket 24 to be rotatable about a horizontal axis (axis extending in the width direction of the machine body 2). Thus, the boom 21 is swingable in the up-down direction (vertical direction).

The electric working machine 1 performs work using the traveling device 10, the working device 20, and/or the swivel motor MT, including the above-described travel motors ML, MR, and/or the hydraulic cylinders C1 to C5. Hydraulic devices include hydraulic actuators including the travel motors ML, MR, the swivel motor MT, and the hydraulic cylinders C1 to C5. The traveling device 10 is also one of working devices included in the electric working machine 1.

The following discusses a hydraulic circuit included in the electric working machine 1.

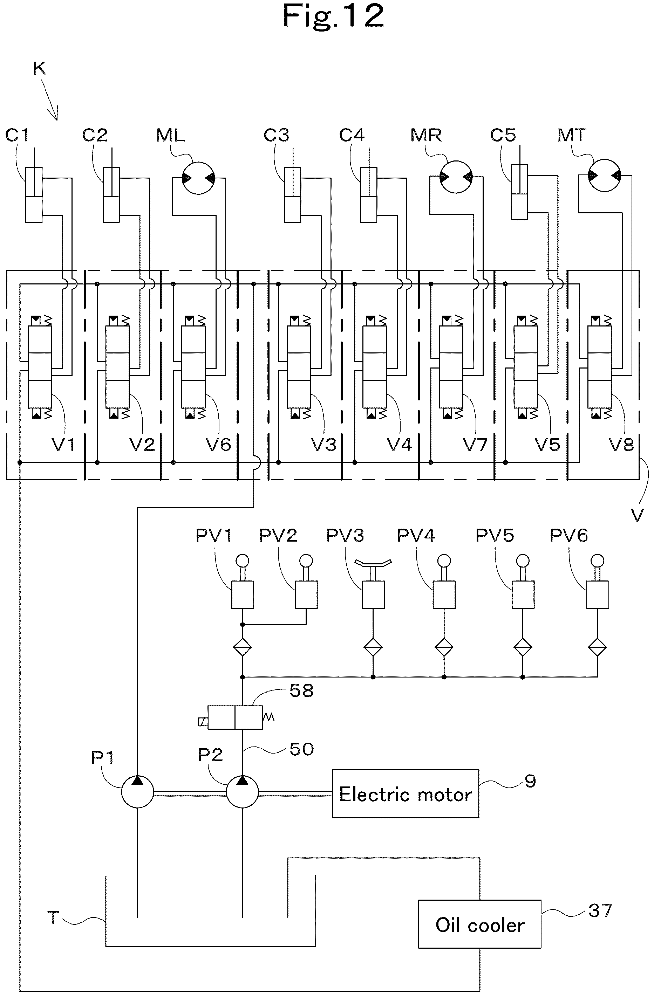

FIG. 12 illustrates a hydraulic circuit K included in the electric working machine 1. The hydraulic circuit K includes hydraulic devices including the hydraulic actuators C1 to C5, ML, MR, MT, a control valve assembly V, hydraulic pumps P1, P2, a hydraulic fluid tank T, an oil cooler 37, operating valves PV1 to PV6, an unloading valve 58, a fluid passage 50 and/or the like.

One of the plurality of hydraulic pumps P1, P2 is a hydraulic pump P1 for actuation, and the other of the plurality of hydraulic pumps P1, P2 is a hydraulic pump P2 for control. The hydraulic pumps P1, P2 are driven by power of the electric actuator 9 (electric motor).

The operation hydraulic pump P1 sucks the hydraulic fluid stored in the hydraulic fluid tank T, and then delivers the hydraulic fluid toward the control valve assembly V.

The control hydraulic pump P2 sucks the hydraulic fluid stored in the hydraulic fluid tank T and then delivers the hydraulic fluid, to thus output a hydraulic pressure for signals or control, etc. Although a single hydraulic pump P1 for actuation and a single hydraulic pump P2 for control are provided in the example shown in FIG. 12, the number of hydraulic pumps P1 and the number of hydraulic pumps P2 may be selected appropriately.

The control valve assembly V includes a plurality of control valves V1 to V8. Each of the control valves V1 to V8 controls (adjusts) the flow rate of the hydraulic fluid output from the hydraulic pumps P1, P2 to a corresponding one of the hydraulic actuators C1 to C5, ML, MR, MT. With this, the working device 20 is indirectly actuated by the electric actuator 9 being driven, via the hydraulic fluid delivered by the hydraulic pump P1 for actuation.

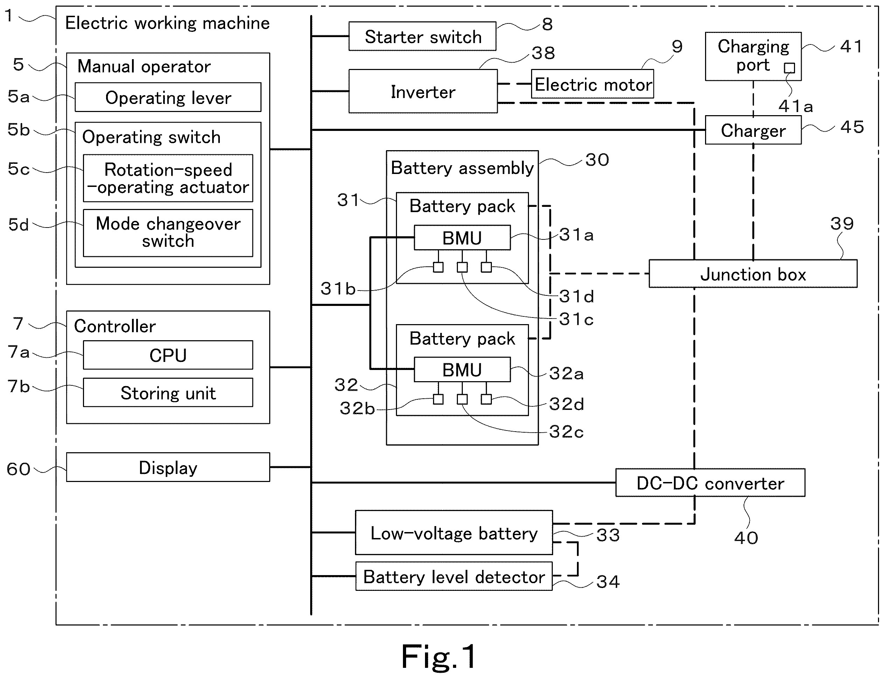

The operating valves PV1 to PV6 are actuated according to the operation of various operating levers 5a (shown in FIG. 1) included in the manual operator 5. Pilot fluid acts on the control valve(s) V1 to V8 in proportion to the actuation amount (operation amount) of the operating valve(s) PV1 to PV6, and therefore the spool(s) of the respective control valve(s) V1 to V8 are moved. Then, the hydraulic fluid in an amount proportional to the amount of movement of the spool(s) of the control valve(s) V1 to V8 is supplied to the corresponding one(s) of the hydraulic actuators C1 to C5, ML, MR, MT to be controlled. Furthermore, the hydraulic actuator(s) C1 to C5, ML, MR, MT are driven according to the amount of the hydraulic fluid supplied from the control valve(s) V1 to V8.

The unloading valve 58 is a two-position switching valve to be switched between a supply position and a restriction position. When the unloading valve 58 is in the supply position, the unloading valve 58 supplies hydraulic fluid from the fluid passage 50 to the operating valves PV1 to PV6. When the unloading valve 58 is in the restriction position, the unloading valve 58 stops supplying the hydraulic fluid from the fluid passage 50 to the operating valves PV1 to PV6, i.e.,

prohibits or restricts the driving of the hydraulic actuators C1 to C5, ML, MR, MT. With this, the working device 20 is allowed to be driven when the unloading valve 58 is in the supply position, and the working device 20 is prohibited or restricted from being driven when the unloading valve 58 is in the restriction position.

The following discusses an electric structure of the electric working machine 1.

FIG. 1 is an electrical block diagram of the electric working machine 1. The manual operator 5 of the electric working machine 1 includes the operating lever(s) 5a and operating switch(es) 5b. The operating lever 5a and the operating switch 5b can be operated by the user sitting in the seat 4. Although the operating lever 5a and the operating switch 5b are each represented by one block in FIG. 1, a plurality of the operating levers 5a and a plurality of the operating switches 5b are actually provided.

The operating switches 5b include a rotation-speed-operating actuator (accelerator dial) 5c to control the rotation speed (motor rotation speed) of the electric motor 9, and a mode changeover switch 5d.

The mode changeover switch 5d is used to input, for example, an instruction to switch between a discharging mode and a charging mode of the controller 7. The operating switches 5b and the mode changeover switch 5d may each be a rotary selector switch, or a pushing button to be pressed. In the case where a display 60 (described later) is a touchscreen that can be operated by touching, the operating switches 5b and the mode changeover switch 5d may each be an image (graphical interface) displayed on the display 60.

The controller 7 is provided in the machine body 2 or inside the protection structure 6, and includes a CPU 7a and a storing unit (memory and/or storage) 7b. As shown in FIG. 1, the CPU 7a controls the operation of elements included in the electric working machine 1. The storing unit 7b includes a memory and/or the like. The storing unit 7b stores information, data, program(s) and/or the like for the CPU 7a to control the operation of elements, in a read-write manner.

As shown in FIG. 1, the electric working machine 1 includes the electric actuator 9, an inverter 38, a junction box 39, a DC-DC converter 40, a charging port 41, a charger 45, a battery assembly 30, and a low-voltage battery 33.

The electric actuator 9 is actuated by electricity supplied by the battery assembly 30. In the present example embodiment, the electric actuator 9 is a driving source of the electric working machine 1, and is, for example, an electric motor including an interior permanent magnet three-phase AC synchronous motor.

The inverter 38 supplies electricity from the battery assembly 30 to the electric motor 9 to drive the electric motor 9. The inverter 38 is electrically connected to the electric motor 9 and the junction box 39. The inverter 38 converts DC electricity input from the battery assembly 30 via the junction box 39 into three-phase AC electricity, and supplies three-phase AC electricity to the electric motor 9. With this, the electric motor 9 is driven. The inverter 38 is configured to adjust the electric current or the voltage of electricity supplied to the electric motor 9. The controller 7 controls the operation of the inverter 38 to drive or stop the electric motor 9.

The junction box 39 is electrically connected to the battery assembly 30, the DC-DC converter 40, and the charger 45, as well as to the inverter 38. The junction box 39 outputs electricity output from the battery assembly 30 to the inverter 38 and/or the DC-DC converter 40. Furthermore, the junction box 39 outputs the electricity input from the charger 45 to the battery assembly 30.

The DC-DC converter 40 is a voltage converter to convert, to a different voltage, the voltage of the DC current input from the battery assembly 30 via the junction box 39. In the present example embodiment, the DC-DC converter 40 is a step-down converter to convert a high voltage of the battery assembly 30 to a predetermined low voltage suitable for electrical component(s) included in the electric working machine 1. The DC-DC converter 40, after converting the voltage, supplies electricity to the low-voltage battery 33. The above-described electrical component(s) includes, for example, the controller 7, the display 60, a fan motor of the oil cooler 37, a fan motor of the radiator, and the like.

The charging port 41 includes a connector for a charging cable to fit, and a connection detection sensor 41a. The charging port 41 is connected to an external power supply (such as commercial power supply or a fast charger) via the charging cable.

When the connection detection sensor 41a detects that the charging cable is connected to the charging port 41, the controller 7 enters the charging mode, and when the connection detection sensor 41a detects that the charging cable is not connected to the charging port 41, the controller 7 enters the discharging mode.

The controller 7 may be switched between the discharging mode and the charging mode without using the mode changeover switch 5d or the connection detection sensor 41a. For another example, when a starter switch 8 is turned on (when the electric working machine 1 is activated), the controller 7 may enter the discharging mode, and when the start switch 8 is not turned on, the controller 7 may enter the charging mode. For another example, the controller 7 may switch between the discharging mode and the charging mode based on the operation state of the operating levers 5a and the operating switches 5b to be used to operate the traveling device 10 and the working device 20.

The charger 45 is electrically connected to the charging port 41 and the junction box 39. The charger 45 converts three-phase AC electricity input from the external power supply via the charging cable and the charging port 41 into DC electricity, and supplies the DC electricity to the junction box 39. The charger 45 includes a rectifier to convert three-phase AC electricity into DC electricity, and an electric circuit to adjust the electric current and the voltage of DC electricity supplied to the junction box 39.

The electric circuit includes, for example, switching element(s), diode(s), resistor(s), and electrolytic capacitor(s). In the present example embodiment, the charger 45 adjusts the electric current and the voltage of DC electricity supplied to the junction box 39 via the electric circuit, and charges the battery assembly 30 at a constant current or a constant voltage. The electric current and the voltage of DC electricity during the constant-current charging or constant-voltage charging are determined by a predetermined table stored in the storing unit 7b. The charger 45 adjusts the electric current and the voltage in response to a signal transmitted from the controller 7.

The battery assembly 30 includes a plurality of battery packs 31, 32. Each of the battery packs 31, 32 is a secondary battery (storage battery) such as a lithium-ion battery including at least one battery. In the case where each of the battery packs 31, 32 includes a plurality of batteries, the plurality of batteries are electrically connected in series and/or in parallel. Each of the batteries of the battery packs 31, 32 includes a plurality of cells (battery cells) inside thereof, and the plurality of cells are electrically connected in series and/or in parallel. Each of the battery packs 31, 32 includes an electric capacity sufficient to allow element(s) of the electric working machine 1 to operate for a predetermined time. In the present example embodiment, the battery packs 31, 32 are connected to each other in parallel.

Although the battery assembly 30 includes two battery packs 31, 32 in the present example embodiment, the number of battery packs of the battery assembly 30 is not limited to two. The battery assembly 30 may include a single battery pack, or include three or more battery packs.

Each of battery packs 31, 32 includes a battery management system (also referred to as a battery management unit) (BMU) (i.e., battery monitor) 31a, 32a. Although, in FIG. 1, the BMU 31a, 32a is included in the battery pack 31, 32, the BMU 31a, 32a may be contained in or provided outside the battery pack 31, 32.

The BMU 31a monitors and controls the corresponding battery pack 31. The BMU 32a monitors and controls the corresponding battery pack 32. Specifically, each of the BMUs 31a, 32a controls opening and closing of relay(s) included in the corresponding one of the battery packs 31, 32 to control starting and stopping electricity supplied from the corresponding one of the battery packs 31, 32. Each of the BMUs 31a, 32a detects the temperature, the voltage, the electric current, the terminal voltage of internal cells, and/or the like, of the corresponding one of the battery packs 31, 32.

Specifically, for example, each of the BMUs 31a, 32a detects the temperature of a corresponding one of the battery packs 31, 32 based on signals detected by temperature detectors 31b, 31c, 31d, 32b, 32c, 32d included in the corresponding one of the battery packs 31, 32. In the present example embodiment, the electric working machine 1 includes a plurality of the temperature detectors 31b, 31c, 31d, 32b, 32c, 32d. The plurality of temperature detectors 31b, 31c, 31d, 32b, 32c, 32d are provided at respective different portions in or on the battery assembly 30. Specifically, the temperature detectors 31b, 31c, 31d are positioned at respective different positions in or on the battery pack 31, and the temperature detectors 32b, 32c, 32d are positioned at respective different positions in or on the battery pack 32. Specifically, the battery assembly 30 includes a plurality of battery cells, and the plurality of temperature detectors 31b, 31c, 31d, 32b, 32c, 32d are provided in or on respective different ones of the battery cells. Although, in the present example embodiment, each of the battery packs 31, 32 includes three temperature detectors, the number of the temperature detectors included in each battery pack is not limited to three.

Furthermore, each of the BMUs 31a, 32a detects the remaining charge of a corresponding one of the battery packs 31, 32 using a voltage measurement method based on, for example, the terminal voltage of cells provided inside the corresponding one of the battery packs 31, 32. It is noted that the method of detecting the remaining charge of the battery packs 31, 32 is not limited to the voltage measurement method, and may be some other method such as Coulomb counter method, battery cell modeling method, or impedance tracking method. Battery level detector(s) to detect the remaining charge of the battery packs 31, 32 may be provided separately from the BMUs 31a, 32a.

The low-voltage battery 33 is a lower-voltage storage battery than the battery assembly 30. The low-voltage battery 33 is charged by electricity supplied from the DC-DC converter 40. The low-voltage battery 33 supplies electricity to electrical component(s) included in the electric working machine 1. A battery level detector 34 includes an electrical circuit to detect the remaining charge of the low-voltage battery 33.

As shown in FIG. 1, the electric working machine 1 includes a display 60. The display 60 is a stationary display, a tablet terminal to display images, or the like. The display 60 is provided in the vicinity of the seat 4 inside the protection structure 6 (e.g., in front of the user). The display 60 displays an operation screen including the rotation speed of the electric motor 9, the temperature of cooling water to cool electrical component(s), the temperature of hydraulic fluid, and/or the like.

The following discusses a discharge control for actuation of the working device 20 that is one of methods of controlling the electric working machine 1 in the present example embodiment. Although, in the present example embodiment, the following discusses the case where the battery pack 31 and the battery pack 32 included in the battery assembly 30 are discharged concurrently, the BMUs 31a, 32a may control relay(s) provided inside the battery packs 31, 32 and/or relay(s) included in the junction box 39, so that at least one battery pack included in the battery assembly 30 may be discharged. Also with regard to a charge control described later, although the charge control will be discussed based on the case where the battery pack 31 and the battery pack 32 are charged concurrently in the present example embodiment, at least one battery pack may be charged.

As the value of discharge electric current (discharge current) from the battery assembly 30 increases, the battery assembly 30 generates more heat. When the battery assembly 30 is relatively hot, the battery assembly 30 may deteriorate. In view of this, the controller 7 is configured or programmed to, when the temperature of the battery assembly 30 increases, reduce the discharge current of the battery assembly 30 to reduce the output of the working device 20.

The controller 7 is configured or programmed to reduce the upper limit of the discharge current supplied from the battery assembly 30 such that the upper limit decreases as the temperature of the battery assembly 30 increases, to perform output restriction. For example, the controller 7 may be configured or programmed to control, according to the temperature of the battery assembly 30, at least one of the rotation speed of the electric motor 9 or the unloading valve 58 of the hydraulic circuit K to reduce the output of the working device 20.

The following first discusses the case where the controller 7 controls a second upper limit I_th2 that is the upper limit of the discharge current, according to the temperature of the battery assembly 30 (second control temperature, also referred to as "second temperature for use in controlling the battery assembly 30"). Such second upper limits I_th2 are defined such that the second upper limits I_th2 correspond to the temperatures of the battery assembly 30 (second control temperatures). The controller 7 controls the second upper limit I_th2 based on a discharge current value map indicating a correspondence relationship in which the temperatures of the battery assembly 30 (second control temperatures) and the second upper limits I_th2 are associated with each other. The discharge current value map is stored in the storing unit 7b in advance.

In the following description, the temperature of the battery assembly 30 (second control temperature) used by the controller 7 to perform the discharge control is the maximum value or the minimum value of a plurality of pieces of temperature information detected by the temperature detectors 31b, 31c, 31d, 32b, 32c, 32d of the battery assembly 30. Specifically, the controller 7 acquires, from the discharge current value map, the upper limit of the discharge current corresponding to the highest temperature T_max and the upper limit I_th1 of the discharge current corresponding to the lowest temperature T_min, and calculates, as the second control temperature, the temperature corresponding to the lower one of the upper limit I_th1 of the discharge current corresponding to the highest temperature T_max and the upper limit of the discharge current corresponding to the lowest temperature T_min. The second control temperature is not limited to the maximum value or the minimum value of the plurality of pieces of temperature information, and the second control temperature may be calculated by some other calculation method, and may be, for example, the maximum value of a plurality of pieces of temperature information. There is no particular limitation.

The following discusses the relationship between the temperatures of the battery assembly 30 (second control temperatures) and the second upper limits I_th2 (discharge current value map).

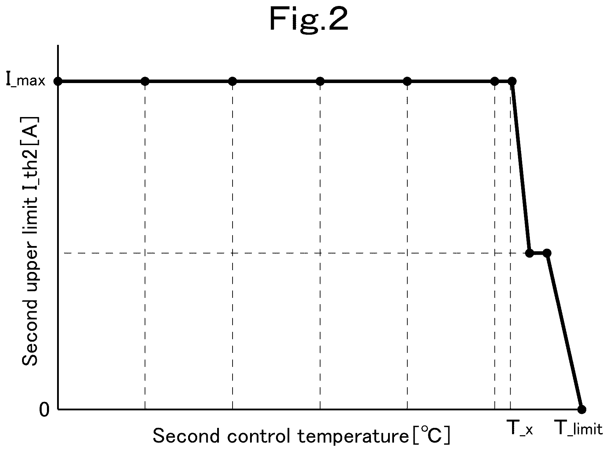

FIG. 2 illustrates a relationship between the second control temperatures and the second upper limits I_th2. In FIG. 2, the vertical axis represents the second upper limit I_th2, and the horizontal axis represents the second control temperature.

It is defined that, when the second control temperature is sufficiently low (T < T_x), the second upper limit I_th2 is the maximum electric current value (I_max).

It is defined that, when the second control temperature increases and approaches an allowable limit temperature T_limit (T_x ≤ T < T_limit), the second upper limit I_th2 decreases to be lower than I_max as the second control temperature increases. It is noted here that the allowable limit temperature T_limit is a predetermined value determined by the characteristics of the battery assembly 30, and the allowable limit temperature T_limit may be, for example, 60°C or 70°C. When the temperature of the battery assembly 30 is equal to or higher than the allowable limit temperature T_limit (T > T_limit), the second upper limit I_th2 is zero.

Although the discharge current value map is stored in the storing unit 7b in advance, the user may operate the manual operator 5 and/or the display 60 to change the discharge current value map. Although, in the present example embodiment, the discharge current value map is stored in the storing unit 7b in advance as a table data structure, as another example, the storing unit 7b may store a software program including a function representing the relationship between the second control temperature and the second upper limit I_th2. In this case, the controller 7 is configured or programmed such that, in the discharging mode, the CPU 7a executes the software program to calculate the second upper limit I_th2 according to the temperature of the battery assembly 30 (second control temperature).

In the example of the discharge current value map shown in FIG. 2, the second upper limit I_th2 stays at the maximum electric current value I_max until immediately before reaching the allowable limit temperature T_limit. With this, the electric working machine 1 is able to continue working with the maximum electricity output from the battery assembly 30, making it possible to maintain work efficiency.

Note, however, that the discharge current value map shown in FIG. 2 is merely an example. When holding down increases in the temperature of the battery assembly 30 is to be prioritized, the second upper limit I_th2 may be set to lower values also at lower second control temperatures. With this, it is possible to reduce the deterioration of the battery assembly 30.

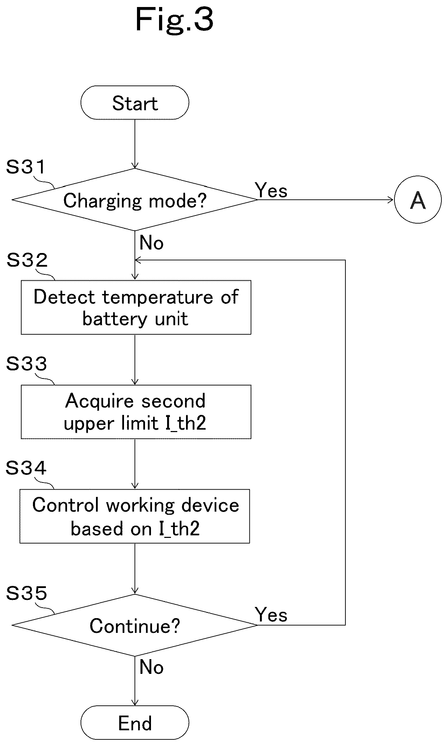

FIG. 3 illustrates a flow of a process of the discharge control. The process shown in FIG. 3 is performed by the CPU 7a based on the software program stored in advance in the storing unit 7b of the controller 7.

The controller 7 determines whether the electric working machine 1 is currently in the discharging mode or in the charging mode (S31). The controller 7 determines whether the electric working machine 1 is in the discharging mode or in the charging mode based on the result detected by the connection detection sensor 41a indicating whether the charging cable is connected to the charging port 41 or based on the switching state of the mode changeover switch 5d configured to operated by the user to switch between the discharging mode and the charging mode.

When the controller 7 determines that the electric working machine 1 is currently in the discharging mode (NO at S31), the controller 7 acquires the temperature of the battery assembly 30 (second control temperature) detected by the BMU 31a and the BMU 32a (S32). The BMU 31a and the BMU 32a calculate the second control temperature based on the temperature information detected by the plurality of temperature detectors 31b, 31c, 31d, 32b, 32c, 32d, and output the calculation result to the controller 7.

After step S32, the controller 7 acquires the second upper limit I_th2 based on the detected second control temperature and the discharge current value map stored in the storing unit 7b (S33).

After step S33, the controller 7 outputs an instruction signal to the inverter 38 based on the operation of the manual operator 5 (rotation-speed-operating actuator 5c) and the second upper limit I_th2 (S34). In so doing, the controller 7 controls the inverter 38 such that the electric current value of electricity supplied to the electric motor 9 via the inverter 38 is equal to or less than the second upper limit I_th2.

The controller 7 only needs to be configured or programmed to control the output of the working device 20 according to the temperature of the battery assembly 30 (second control temperature), and, when the second control temperature reaches the allowable limit temperature T_limit, the controller 7 may cause the unloading valve 58 to switch from the supply position to the restriction position to restrict the drive of the working device 20. Additionally or alternatively, when the second control temperature reaches the allowable limit temperature T_limit, the controller 7 may change the instruction signal output to the inverter 38, reduce the target rotation speed of the electric motor 9 to be lower than the target rotation speed corresponding to the operation of the rotation-speed-operating actuator 5c, to control the operation of the working device 20.

After step S34, the controller 7 determines whether to continue actuating the working device 20 based on the operation state of the operating levers 5a or the operating switches 5b (S35). When the controller 7 determines to continue actuating the working device 20 (YES at S35), the controller 7 returns to step S32.

When the controller 7 determines not to continue performing the discharging process (NO at S35), the controller 7 ends the process.

The following discusses a charge control in the present example embodiment.

To charge the battery assembly 30 in a short time, it is necessary to increase the value of the electric current (charging current) supplied to the battery assembly 30. However, as with the case of discharging, the battery assembly 30 generates more heat as the value of the electric current supplied to the battery assembly 30 increases. In this case, the temperature of the battery assembly 30 increases, and the battery assembly 30 may deteriorate. Therefore, when the temperature of the battery assembly 30 is relatively high, it is preferable to reduce the value of the charging current to hold down increases in the temperature of the battery assembly 30.

If the controller 7 performs the discharge control when the battery assembly 30 is relatively hot immediately after charging, the temperature of the battery assembly 30 readily reaches the allowable limit temperature T_limit, and the controller 7 restricts the operation of the working device 20 by performing the above-described output restriction or stops the working device 20. Thus, to perform intended work without performing the output restriction even immediately after charging, it is necessary to hold down increases in the temperature of the battery assembly 30 by performing charging at a relatively low electric current value. In other words, an appropriate value of the charging current of the battery assembly 30 differs between when the battery assembly 30 is to be charged in a short time and when the working device 20 is to be operated without the output restriction immediately after charging.

In view of this, the controller 7 in the present example embodiment, according to the temperature of the battery assembly 30, controls a first upper limit I_th1 that is the upper limit of the charging current supplied to the battery assembly 30. Furthermore, the controller 7 is configured or programmed to switch between (i) a first mode in which the controller 7 controls the charging current based on a first correspondence relationship in which the temperatures of the battery assembly 30 and the first upper limits I_th1 are associated with each other, and (ii) a second mode in which the controller 7 controls the charging current based on a second correspondence relationship in which the first upper limits I_th1 are lower than in the first correspondence relationship at one or more of the temperatures. That is, the method of controlling the electric working machine 1 includes a first step including selecting the predetermined first mode or the predetermined second mode, and a second step including controlling the first upper limit I_th1 that is the upper limit of the charging current supplied to the battery assembly 30 according to the first mode or the second mode selected in the first step and the temperature of the battery assembly 30, and the second step includes, when the first mode is selected, controlling the charging current based on the first correspondence relationship in which the temperatures of the battery assembly 30 and the first upper limits I_th1 are associated with each other, and, when the second mode is selected, controlling the charging current based on the second correspondence relationship in which the first upper limits I_th1 are lower than in the first correspondence relationship at one or more of the temperatures.

The following discusses the case where the controller 7 controls the upper limit of the charging current (first upper limit I_th1) according to the temperature of the battery assembly 30 (first control temperature, as well as the second control temperature, also referred to as "second temperature for use in controlling the battery assembly 30"). Such first upper limits I_th1 are defined such that the first upper limits I_th1 correspond to the temperatures of the battery assembly 30 (first control temperatures). The controller 7 controls the charging current based on a correspondence relationship (charging current value map) in which the temperatures of the battery assembly 30 (first control temperatures) and the upper limits of the charging current (first upper limits I_th1) are associated with each other. The charging current value map defines the relationship between the first control temperatures and the first upper limits I_th1, and is stored in the storing unit 7b in advance.

In the following description, the temperature of the battery assembly 30 (first control temperature) used by the controller 7 to perform the charge control is the maximum value or the minimum value of a plurality of pieces of temperature information detected by the temperature detectors 31b, 31c, 31d, 32b, 32c, 32d of the battery assembly 30. Specifically, the controller 7 acquires, from the charging current value map, the upper limit of the charging current corresponding to the highest temperature and the upper limit of the charging current corresponding to the lowest temperature, and calculate, as the first control temperature, the temperature corresponding to the lower one of the upper limit of the charging current corresponding to the highest temperature and the upper limit of the charging current corresponding to the lowest temperature. The first control temperature is not limited to the maximum value or the minimum value of the plurality of pieces of temperature information, and the first control temperature may be calculated by some other calculation method, and may be, for example, the maximum value of the plurality of pieces of temperature information. There is no particular limitation.

The following first discusses the charging current value map indicating the correspondence relationships (first correspondence relationship, second correspondence relationship), for the respective first and second modes, in each of which the temperatures of the battery assembly 30 (first control temperatures) and the first upper limits I_th1 are associated with each other.

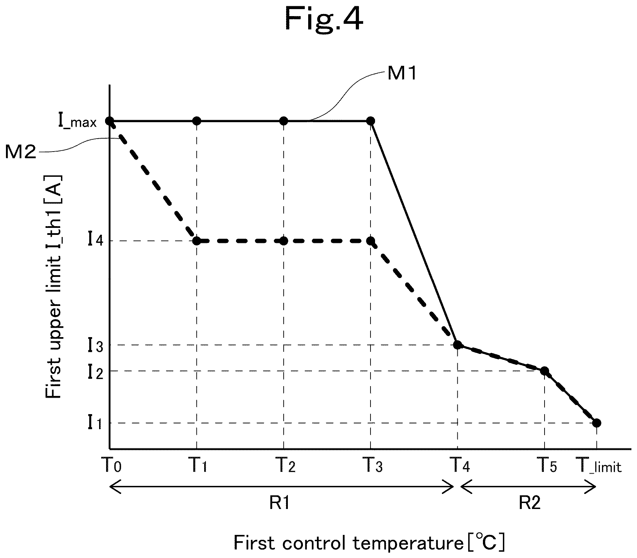

FIG. 4 illustrates the correspondence relationships each between the first control temperatures and the first upper limits I_th1. In FIG. 4, the vertical axis represents the first upper limit I_th1 and the horizontal axis represents the first control temperature. In FIG. 4, a line M1 represents the first correspondence relationship of the first mode, and a line M2 represents the second correspondence relationship of the second mode.

The first mode (normal mode M1) is a mode in which quick charging is prioritized. Hereinafter, the first mode is referred to as a normal mode M1. The second mode (heat generation suppression mode M2) is a mode in which suppressing the heat generation of the battery assembly 30 during charging is prioritized. Hereinafter, the second mode is referred to as a heat generation suppression mode M2. The heat generation suppression mode M2 is suitable in the case where the working device 20 is to be operated without the output restriction immediately after charging, and the case where the electric working machine 1 is to be charged when the temperature of the battery assembly 30 (first control temperature) is already relatively high because of the environment where the ambient temperature is relatively high (e.g., summer). Thus, at one or more temperatures (for example, in a first temperature range R1 shown in FIG. 4), the first upper limits I_th1 of the heat generation suppression mode M2 are lower than the first upper limits I_th1 of the normal mode M1.

The controller 7, in each of the normal mode M1 and the heat generation suppression mode M2, lowers the first upper limit I_th1 as the temperature of the battery assembly 30 increases. Specifically, in the normal mode M1, when the first control temperature is sufficiently low (T < T3), the first upper limit I_th1 is at the maximum (I_max). As the first control temperature increases (rises), the controller 7 lowers the first upper limit I_th1 (the first upper limit I_th1 decreases). In other words, the first upper limit I_th1 monotonically decreases with respect to the first control temperature. Also in the heat generation suppression mode M2, the first upper limit I_th1 monotonically decreases with respect to the first control temperature.

As shown in FIG. 4, at the temperatures of the battery assembly 30 in the predetermined first temperature range R1, the first upper limits I_th1 of the heat generation suppression mode M2 are lower than the first upper limits I_th1 of the normal mode M1 in the first temperature range R1. The first upper limits I_th1 of the heat generation suppression mode M2 in a second temperature range R2 in which the temperatures of the battery assembly 30 are higher than in the first temperature range R1 are equal to or substantially equal to the first upper limits I_th1 of the normal mode M1 in the second temperature range R2.

In at least one of the normal mode M1 or the heat generation suppression mode M2, the first upper limits I_th1 in the predetermined first temperature range R1 are constant with respect to the first control temperatures that are the temperatures of the battery assembly 30. That is, the first upper limits I_th1 are constant with respect to the first control temperatures, and the first upper limit I_th1 does not need to always lower (decrease) as the first control temperature increases, and the first upper limits I_th1 may be constant in a temperature range at one or more of the first control temperatures. For example, in the present example embodiment, the first upper limit I_th1 of the normal mode M1 is constant in the first temperature range R1 in which the first control temperature is low. Similarly, the first upper limit I_th1 of the heat generation suppression mode M2 is also constant.

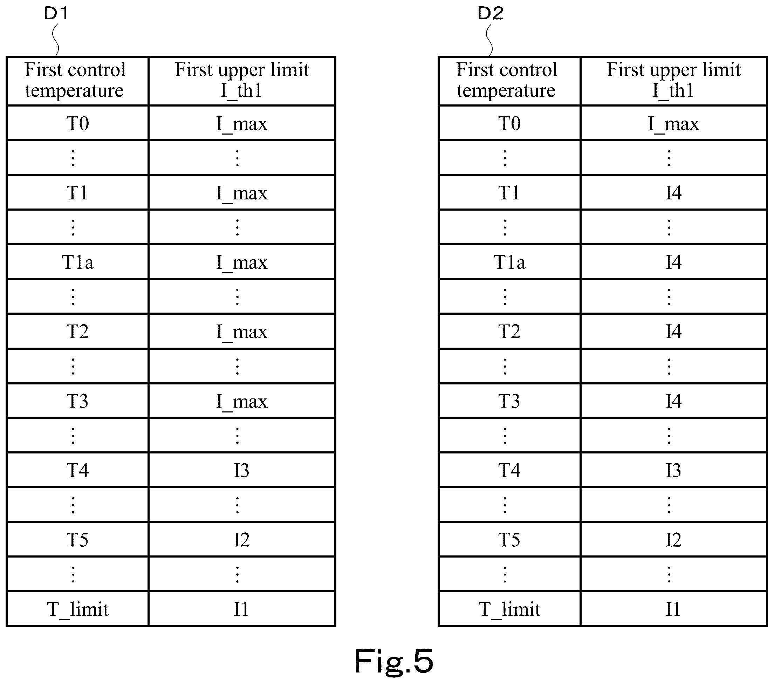

FIG. 5 illustrates examples of a data structure of the charging current value map stored in the storing unit 7b. The storing unit 7b stores the first control temperatures and the first upper limits I_th1 corresponding to the first control temperatures in the form of a table. The charging current value map of the normal mode M1 is a table D1. The charging current value map of the heat generation suppression mode M2 is a table D2.

Although the storing unit 7b stores the charging current value maps in advance, the user may operate the manual operator 5 and/or the display 60 to change the charging current value map(s). For another example, the storing unit 7b may store a software program including a function representing the relationship between the first control temperature and the first upper limit I_th1. In this case, the controller 7 is configured or programmed such that, in the charging mode, the CPU 7a performs the software program to calculate the first upper limit I_th1 according to the temperature of the battery assembly 30 (first control temperature).

The following discusses a process performed by the controller 7 to switch between the normal mode M1 and the heat generation suppression mode M2 (select the normal mode M1 or the heat generation suppression mode M2).

The electric working machine 1 includes switches B1, B2, B3 used to perform switching (selection) between the normal mode M1 and the heat generation suppression mode M2. The switches B1, B2, B3 are, for example, images (graphical interfaces) displayed on the display 60. When the manual operator 5 is operated in a predetermined manner and the switch(es) B1, B2, B3 are/is operated, the controller 7 switches between the normal mode M1 and the heat generation suppression mode M2. In the case where the display 60 is a touchscreen that can be operated by touching, the controller 7 may switch between the normal mode M1 and the heat generation suppression mode M2 when the switch(es) B1, B2, B3 displayed on the display 60 are/is touched.

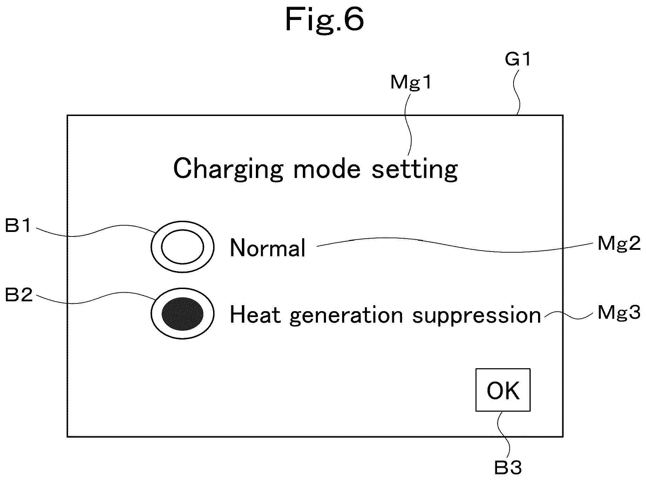

FIG. 6 illustrates an example of a switching screen displayed on the display 60.

When the manual operator 5 is operated in a predetermined manner, the controller 7 causes the display 60 to display the switching screen G1. The switching screen G1 in the present example embodiment includes a message Mg1 (for example, "charging mode settings") indicating that the screen is for a switching operation, a message Mg2 (for example, "normal") and a message Mg3 (for example, "heat generation suppression") indicating the modes selectable on the switching screen G1, switches (a radio button B1, a radio button B2, and a confirm button B3) and/or the like. In the present example embodiment, the switches include the radio button B1, the radio button B2, and the confirm button B3. The user selects the desired mode using the radio button B1 or the radio button B2, and confirms the selected mode by operating the confirm button B3.

The controller 7 causes the display 60 to display information relating to the current mode acquired by referring to the storing unit 7b. For example, in the switching screen G1 shown in FIG. 6, the radio button B2 is black, i.e., the radio button B2 is on. It is apparent from this that the current mode of the electric working machine 1 is the heat generation suppression mode M2.

When the manual operator 5 is operated in a predetermined manner, the controller 7 causes the display 60 to display a screen for switching modes. For example, the controller 7 causes the display 60 to display a screen for switching between turning on (black) and turning off (white) of the radio button B1 and the radio button B2.

When the manual operator 5 is operated in a predetermined manner to push the confirm button B3, the controller 7 stores the selected mode in the storing unit 7b. For example, in FIG. 6, the switching screen G1 indicates that the message Mg3 ("heat generation suppression") is selected. When the confirm button B3 is pushed in this state, the heat generation suppression mode M2 is stored in the storing unit 7b.

It is noted that the configuration of the switching screen G1 is merely an example. For example, the user interface may be in a pull-down form. The selected mode may be indicated by changing the background colors of the message Mg2 and the message Mg3.

Furthermore, the controller 7 may switch between the normal mode M1 and the heat generation suppression mode M2 via voice recognition or image recognition without relying on a predetermined operation on the manual operator 5. For example, the controller 7 recognizes the voice of the user acquired by a voice input interface and switches between the normal mode M1 and the heat generation suppression mode M2. For another example, the controller 7 recognizes a bar code or characters captured by a camera, determines which mode to select, and switches between the normal mode M1 and the heat generation suppression mode M2.

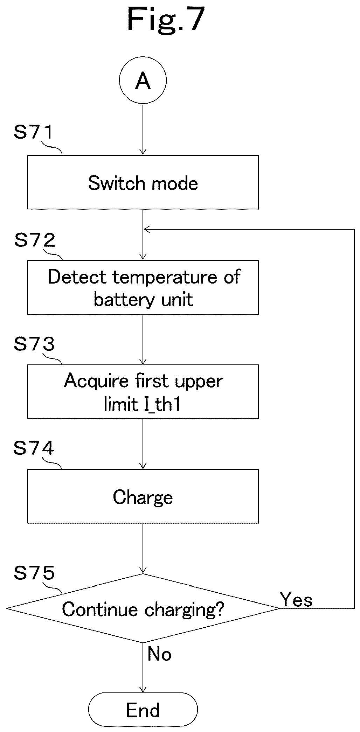

The following discusses a process of the charge control, which is one of the methods of controlling the electric working machine 1 in the present example embodiment. FIG. 7 illustrates a process of the charge control performed by the controller 7. The process shown in FIG. 7 is performed by the CPU 7a based on the software program prestored in the storing unit 7b of the controller 7.

When the controller 7 determines that the current mode of the electric working machine 1 is the charging mode (FIG. 3, YES at S31), the controller 7 refers to the storing unit 7b and switches the mode of determining the first upper limit I_th1 (S71). Specifically, the controller 7 refers to the storing unit 7b, reads whether the current mode is the normal mode M1 or the heat generation suppression mode M2, and acquires the address of the charging current value map to be referenced when determining the first upper limit I_th1.

After step S71, the controller 7 acquires the first control temperature detected by the BMU 31a and the BMU 32a (S72). The BMU 31a and the BMU 32a calculate the first control temperature based on the temperature information detected by the plurality of temperature detectors 31b, 31c, 31d, 32b, 32c, 32d, and output the calculation result to the controller 7.

After step S72, the controller 7 controls, according to the temperature of the battery assembly 30 (first control temperature), the first upper limit I_th1 that is the upper limit of the charging current supplied to the battery assembly 30 (S73). In other words, the controller 7 acquires the first upper limit I_th1 that is the upper limit of the charging current based on the first control temperature, the information relating to the current mode, and the charging current value map corresponding to the current mode.

For example, when the current mode is the heat generation suppression mode M2 and the detected first control temperature is T1a (T1 < T1a < T2), the controller 7 refers to the table D2 including the discharge current value map corresponding to the heat generation suppression mode M2, and determines the corresponding first upper limit I_th1 as I4. On the other hand, when the current mode is the normal mode M1 and the detected first control temperature is T1a (T1 < T1a < T2), the controller 7 refers to the table D1 including the discharge current value map corresponding to the normal mode M1, and determines the first upper limit I_th1 as the I_max. That is, even if the temperature of the battery assembly 30 (first control temperature) is the same, the first upper limit I_th1 in the heat generation suppression mode M2 (second mode) is lower than the first upper limit I_th1 in the normal mode M1 (first mode).

After step S73, the controller 7 outputs an instruction signal of the first upper limit I_th1 to the charger 45. The charger 45 performs adjustment such that the electric current of DC electricity output to the battery assembly 30 is equal to or lower than the first upper limit I_th1 and charges the battery assembly 30 (S74).

After step S74, the controller 7 determines whether to continue charging the battery assembly 30 based on the state (remaining charge) of the battery assembly 30 detected by the BMU 31a and the BMU 32a (S75).

For example, the controller 7 determines not to continue charging if the remaining charge of the battery assembly 30 is 100%. The reference based on which the controller 7 determines whether to continue charging may be changed depending on the current mode. For example, when the current mode is the normal mode M1, the controller 7 determines not to continue charging if the remaining charge of the battery assembly 30 is 100%. On the other hand, when the current mode is the heat generation suppression mode M2, the controller 7 determines not to continue charging if the remaining charge of the battery assembly 30 is 80%. In this case, the value of the remaining charge of the battery assembly 30 used as the reference is stored in advance in the storing unit 7b such that it is associated with the table D1, D2.

When the controller 7 determines to continue charging the battery assembly 30 (YES at S75), the controller 7 returns to step S72.

When the controller 7 determines not to continue charging the battery assembly 30 (NO at S75), the controller 7 ends the process.

The following discusses the method of controlling displaying of the temperature of the battery assembly 30, which is one of the methods of controlling the electric working machine 1.

As described above, since the controller 7 performs control to reduce the electric current supplied to the battery assembly 30 when the battery assembly 30 is relatively hot, the charging takes a longer time to be completed. Furthermore, at low temperature, because of the characteristics of the battery, the ability of the battery to receive charge is low, and the charging takes a longer time to be completed. That is, the time for the battery assembly 30 to be charged is likely to be short at medium temperature, and long at high or low temperature.

Therefore, in the case where the electric working machine 1 includes the plurality of temperature detectors 31b, 31c, 31d, 32b, 32c, 32d, in order for the user to know an estimate of the time for the battery assembly 30 to be charged based on the temperature of the battery assembly 30, if the temperature of the battery assembly 30 is relatively high, it is preferable that the display 60 display the highest temperature (maximum value) of a plurality of temperatures detected by the temperature detectors 31b, 31c, 31d, 32b, 32c, 32d. Similarly, if the temperature of the battery assembly 30 is relatively low, it is preferable that the display 60 display the lowest temperature (minimum value) of the plurality of temperatures detected by the temperature detectors 31b, 31c, 31d, 32b, 32c, 32d.

However, when the displayed temperature switches from the highest temperature to the lowest temperature or from the lowest temperature to the highest temperature, the value of the temperature displayed on the display 60 may change significantly, and the user may be confused. Thus, when the battery assembly 30 is at medium temperature, the display 60 displays a temperature-for-display weighted based on the highest temperature and the lowest temperature.

Specifically, the controller 7 calculates a first temperature T_show, which is the temperature-for-display, based on the lowest temperature T_min and the highest temperature T_max of the temperatures detected by the plurality of temperature detectors 31b, 31c, 31d, 32b, 32c, 32d configured to detect the temperature of the battery assembly 30, and a weighting value to assign weights such that a weight assigned to the lowest temperature T_min increases as the lowest temperature T_min decreases. The display 60 displays the first temperature T_show calculated by the controller 7. The method of controlling the electric working machine 1 includes the steps of determining the lowest temperature T_min and the highest temperature T_max of the temperatures detected by the plurality of temperature detectors 31b, 31c, 31d, 32b, 32c, 32d, and calculating the first temperature T_show based on the lowest temperature T_min, the highest temperature T_max, and the weighting value to assign weights such that a weight assigned to the lowest temperature T_min increases as the lowest temperature T_min decreases.

The weighting value used to calculate the first temperature T_show changes depending on the lowest temperature T_min. A first weighting value $\alpha$ by which the lowest temperature T_min is multiplied increases as the lowest temperature decreases, and a second weighting value (1-$\alpha$) by which the highest temperature T_max is multiplied increases as the lowest temperature increases.

When the lowest temperature T_min is lower than a first predetermined value th1 (T_min < th1), the controller 7 determines the lowest temperature T_min as the first temperature T_show. The first predetermined value th1 is not particularly limited, and may be, for example, 0°C or -5°C. When the lowest temperature T_min is equal to or higher than a second predetermined value (th2 $\leq$ T_min), the controller 7 determines the highest temperature T_max as the first temperature T_show. The second predetermined value th2 is not particularly limited, and may be, for example, 20°C or 30°C. When the lowest temperature T_min is equal to or higher than the first predetermined value th1 and lower than the second predetermined value th2 (th1 $\leq$ T_min < th2), the controller 7 calculates the first temperature T_show, which is the temperature-for-display, using the lowest temperature T_min, the highest temperature T_max, and the weighting value.

In other words, the above description indicates that the controller 7 calculates the first temperature T_show based on the following equation.

$$T\_show = T\_min \times \alpha + T\_max \times (1\text{-}\alpha) \ldots \quad (1)$$

The first weighting value by which the lowest temperature is multiplied is $\alpha$. The second weighting value by which the highest temperature is multiplied is 1-$\alpha$. The first weighting value $\alpha$ and the second weighting value 1-$\alpha$ indicate ratios of the lowest temperature T_min and the highest temperature T_max to the first temperature T_show to be displayed. The sum of the first weighting value $\alpha$ and the second weighting value 1-$\alpha$ equals to 1. That is, when the first weighting value $\alpha$ is determined, the second weighting value 1-$\alpha$ is uniquely determined.

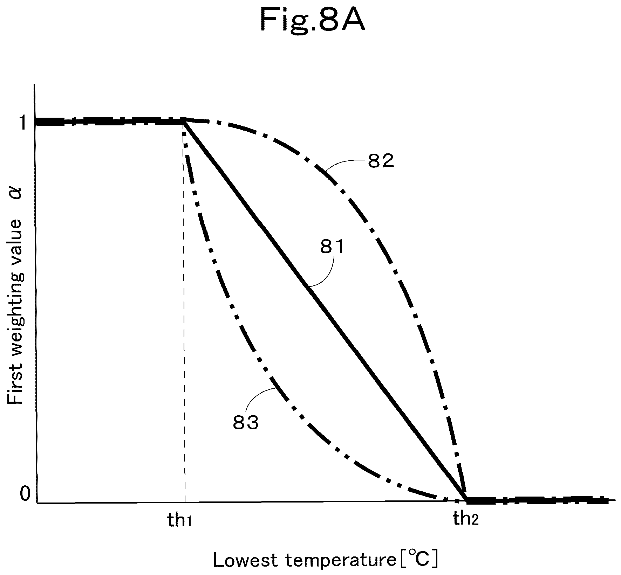

The following discusses the relationship between the first weighting value $\alpha$ and the lowest temperature T_min with reference to diagrams. FIG. 8A illustrates a relationship between the first weighting value $\alpha$ and the lowest temperature T_min. In FIG. 8A, the vertical axis represents the first weighting value $\alpha$, and the horizontal axis represents the lowest temperature T_min. The first weighting value $\alpha$ increases as the lowest temperature T_min decreases. In other words, the first weighting value $\alpha$ monotonically decreases with respect to the lowest temperature T_min.

The first weighting value $\alpha$ ranges from 0 to 1 ($0 \leq \alpha \leq 1$). When the lowest temperature T_min is lower than the first predetermined value th1 (T_min < th1), the first weighting value $\alpha$ is 1. These are expressed by the following equation.

$$T\_show = T\_min \ldots \quad (2)$$

When the lowest temperature T_min is equal to or higher than the second predetermined value th2 (th2 $\leq$ T_min), the first weighting value $\alpha$ is zero. This is expressed by the following equation.

$$T\_show = T\_max \ldots \quad (3)$$

The first weighting value $\alpha$ decreases at a constant ratio in the temperature range defined by the first predetermined value th1 to the second predetermined value th2. That is, the first weighting value $\alpha$ monotonically decreases linearly (line 81 in FIG. 8A). The first weighting value $\alpha$ does not need to change at a constant ratio and may change in a non-linear fashion. For example, the first weighting value $\alpha$ may change along a line 82 shown in FIG. 8A or along a line 83 shown in FIG. 8A.

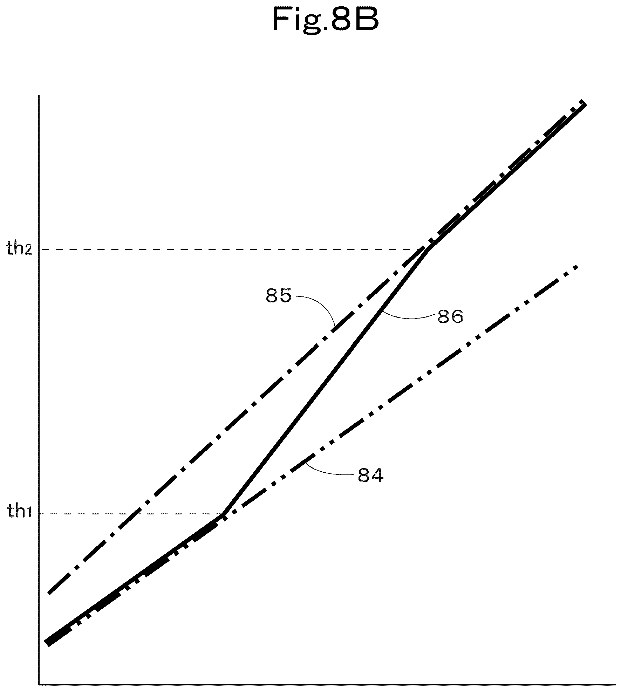

FIG. 8B illustrates a relationship between the lowest temperature, the highest temperature, and the temperature-for-display. When the lowest temperature T_min (line 84 in FIG. 8B) is lower than the first predetermined value th_1 (T_min < th1), the first temperature T_show (line 86 in FIG. 8B) is equal in value to the lowest temperature T_min. When the lowest temperature T_min is equal to or higher than the first predetermined value th1 and lower than the second predetermined value th2 (th1 $\leq$ T_min < th2), as the lowest temperature T_min increases, the difference between the first temperature T_show and the lowest temperature T_min increases and the first temperature T_show approaches the highest temperature T_max. When the lowest temperature T_min is equal to or higher than the second predetermined value th_2 (th2 $\leq$ T_min), the first temperature T_show is equal in value to the highest temperature T_max (line 85 in FIG. 8B).

In the present example embodiment, the first weighting value $\alpha$ corresponding to the lowest temperature T_min is stored in advance in the storing unit 7b as a table data structure. For another example, the storing unit 7b may store a software program including a function representing the relationship between the lowest temperature T_min and the first weighting value $\alpha$. In this case, the controller 7 is configured or programmed such that the CPU 7a executes the software program to calculate the first weighting value $\alpha$ corresponding to the lowest temperature T_min.

In the present example embodiment, in the temperature displaying control performed by the controller 7, the controller 7 determines the first weighting value $\alpha$ stored in the storing unit 7b, and then determines the second weighting value 1-$\alpha$ by subtracting the first weighting value $\alpha$ from 1. On the other hand, the storing unit 7b may store in advance the second weighting value 1-a, as well as the first weighting value $\alpha$, as a table data structure. For another example, the storing unit 7b may store a software program including a function representing the relationship between the lowest temperature T_min and the second weighting value 1-$\alpha$. In this case, the controller 7 is configured or programmed such that the CPU 7a executes the software program to calculate the second weighting value 1-$\alpha$ corresponding to the lowest temperature T_min.

Note that, as described above, the controller 7 calculates, separately from the first temperature T_show, the second temperature(s) for use in controlling the battery assembly 30. The second temperature is, for example, the above-described first control temperature in the charge control and/or the above-described second control temperature in the discharge control. The controller 7 controls, based on the second temperature(s), at least one of the charging current during charging of the battery assembly 30 or the discharge current during discharging of the battery assembly 30.

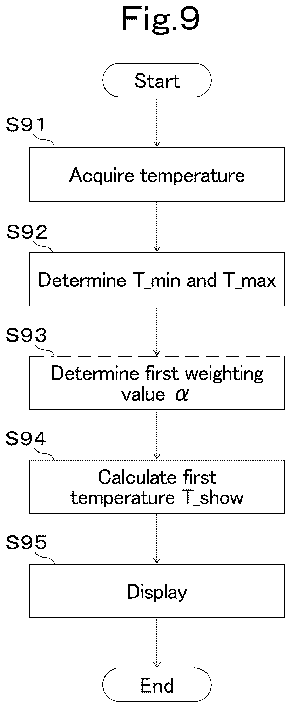

The following discusses a flow of a process performed by the controller 7 to control the displayed temperature of to the battery assembly 30 with reference to FIG. 9. The CPU 7a performs the process shown in FIG. 9 based on the software program stored in advance in the storing unit 7b of the controller 7.

The controller 7 acquires the temperatures detected by the BMU 31a and the BMU 32a (S91). The BMU 31a and the BMU 32a output the temperature information detected by the plurality of temperature detectors 31b, 31c, 31d, 32b, 32c, 32d to the controller 7. After step S91, the controller 7 detects the lowest temperature T_min and the highest temperature T_max of the plurality of pieces of temperature information (S92).

After step S92, the controller 7 determines a weighting value (S93). Specifically, the controller 7 refers to the storing unit 7b, and acquires the first weighting value $\alpha$ corresponding to the detected low temperature T_min. The controller 7 subtracts the first weighting value $\alpha$ from 1 to determine the second weighting value 1-$\alpha$.

After step S93, the controller 7 calculates the first temperature T_show (S94). The first temperature T_show is calculated based on the lowest temperature T_min, the highest temperature T_max, and the weighting value.

After step S94, the controller 7 causes the display 60 of the electric working machine 1 to display the calculated first temperature T_show. The controller 7 causes the display 60 to display, for example, a display screen G2 (S95).

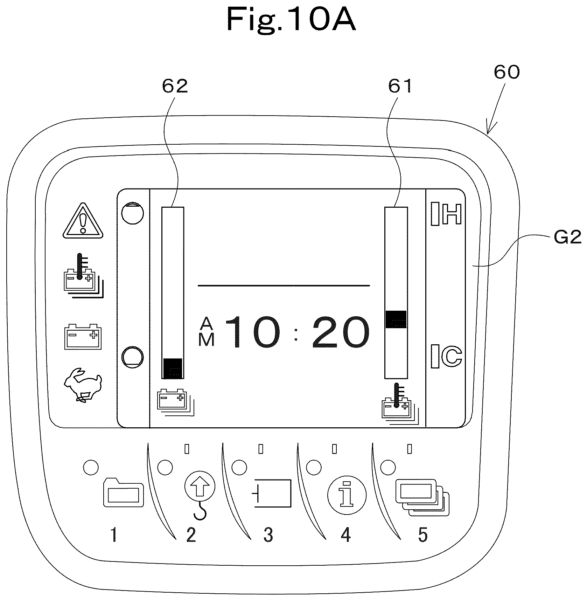

FIG. 10A illustrates an example of the display screen. The display screen G2 includes a battery temperature indicator 61 to indicate the temperature of the battery assembly 30, a remaining battery charge indicator 62 to indicate the remaining charge of the battery assembly 30, and the like.

The battery temperature indicator 61 indicates the first temperature T_show calculated at step S94. The remaining battery charge indicator 62 indicates the remaining charge of the battery assembly 30 (e.g., battery pack 31, battery pack 32) detected by the BMU 31a. For example, the remaining battery charge indicator 62 indicates the lower one of the remaining charge of the battery pack 31 and the remaining charge of the battery pack 32. It is noted here that, since the remaining charge of the battery pack 31 is less than the remaining charge of the battery pack 32, the remaining charge of the battery pack 31 is displayed. The remaining battery charge indicator 62 may be configured to switch, according to the selecting operation via the manual operator 5, between the remaining charge of the battery pack 31 and the remaining charge of the battery pack 32. The remaining battery charge indicator 62 may be configured to display the sum of the remaining charge of the battery pack 31 and the remaining charge of the battery pack 32.

The controller 7 only needs to calculate the first temperature T_show based on the lowest temperature T_min of the temperatures detected by the plurality of temperature detectors 31b, 31c, 31d, 32b, 32c, 32d, the highest temperature T_max of the temperatures detected by the plurality of temperature detectors 31b, 31c, 31d, 32b, 32c, 32d, and the weighting value to assign weights such that a weight assigned to the lowest temperature increases as the lowest temperature decreases. The calculation method is not limited to the above-described methods. For example, assuming that a predetermined temperature is a middle temperature (reference temperature), when the lowest temperature is the reference temperature, the controller 7 may use the average of the temperatures detected by the plurality of temperature detectors 31b, 31c, 31d, 32b, 32c, 32d as the first temperature T_show. In this case, when the lowest temperature is lower than the reference temperature, the controller 7 calculates the first temperature T_show based on the average temperature, the lowest temperature T_min, and the weighting value. When the lowest temperature is equal to or higher than the reference temperature, the controller 7 calculates the first temperature T_show based on the average temperature, the highest temperature T_max, and the weighting value.

Although the examples in which the temperature of the battery assembly 30 is displayed have been described, the controller 7 may calculate the first temperatures T_show of the respective battery packs 31, 32.

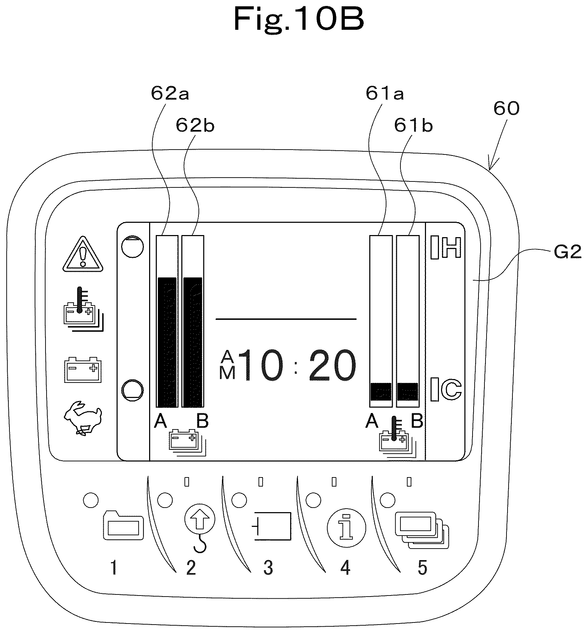

The controller 7 acquires, from the BMU 31a, the lowest temperature and the highest temperature of the temperatures detected by the temperature detectors 31b, 31c, 31d of the battery pack 31, and calculates the first temperature T_show corresponding to the battery pack 31. As shown in FIG. 10B, the controller 7 causes the display 60 to display the first temperature T_show corresponding to the battery pack 31 via a battery temperature indicator 61a.

Similarly, the controller 7 acquires, from the BMU 32a, the lowest temperature and the highest temperature of the temperatures detected by the temperature detectors 32b, 32c, 32d of the battery pack 32, and calculates the first temperature T_show corresponding to the battery pack 32. As shown in FIG. 10B, the controller 7 causes the display 60 to display the first temperature T_show corresponding to the battery pack 32 via a battery temperature indicator 61b.

Although the battery temperature indicators 61, 61a, 61b are gages, the calculated first temperature T_show may be displayed as a number on the display screen.

Although, in the above-described example embodiment, the second temperatures of the battery assembly 30 (first control temperature, second control temperature) in the charge control and the discharge control are each the temperature corresponding to the lower one of the upper limit corresponding to the highest temperature and the upper limit corresponding to the lowest temperature of the plurality of pieces of temperature information detected by the plurality of temperature detectors 31b, 31c, 31d, 32b, 32c, 32d, the second temperatures may each be calculated based on the first predetermined value th1 and the second predetermined value th2. Specifically, for example, when the lowest temperature T_min is lower than the first predetermined value th1, the controller 7 controls at least one of the charging current during charging of the battery assembly 30 or the discharge current during discharging of the battery assembly 30 based on the lowest temperature T_min. When the lowest temperature T_min is equal to or higher than the second predetermined value th2, the controller 7 controls at least one of the charging current or the discharge current based on the highest temperature T_max.

In the present example embodiment, when the lowest temperature T_min of the temperatures detected by the temperature detectors 31b, 31c, 31d, 32b, 32c, 32d is lower than the first predetermined value th1, the controller 7 controls the charging current using the lowest temperature T_min as the second temperature (second control temperature). When the highest temperature T_max of the temperatures detected by the temperature detectors 31b, 31c, 31d, 32b, 32c, 32d is equal to or higher than the second predetermined value th2, the controller 7 controls the discharge current using the highest temperature T_max as the second temperature (second control temperature).

On the other hand, when the lowest temperature T_min of the temperatures detected by the temperature detectors 31b, 31c, 31d, 32b, 32c, 32d is lower than the first predetermined value th1, the controller 7 controls the discharge current using the lowest temperature T_min as the second temperature (first control temperature). When the highest temperature T_max of the temperatures detected by the temperature detectors 31b, 31c, 31d, 32b, 32c, 32d is equal to or higher than the second predetermined value th2, the controller 7 controls the discharge current using the highest temperature T_max as the second temperature (first control temperature).

In this case, when the lowest temperature T_min of the temperatures detected by the temperature detectors 31b, 31c, 31d, 32b, 32c, 32d is equal to or higher than the first predetermined value th1, and the highest temperature T_max of the temperatures detected by the temperature detectors 31b, 31c, 31d, 32b, 32c, 32d is lower than the second predetermined value th2, the controller 7 may use, as the second temperature, the lowest temperature T_min, the highest temperature T_max or the average of the lowest temperature T_min and the highest temperature T_max.

Although, in the above-described example embodiment, the mode is switched between the normal mode M1 and the heat generation suppression mode M2 when the manual operator 5 is operated in a predetermined manner, i.e., when the user performs an operation to give an instruction, the controller 7 may switch the mode by automatically determining the mode based on predetermined condition(s).

For example, the controller 7 may determine whether to enter the normal mode M1 or the heat generation suppression mode M2 according to the current time information. Specifically, for example, when the current time is daytime, it is expected that the electric working machine 1 is to be operated (i.e., the battery assembly 30 is to be discharged) immediately after charging, and therefore the controller 7 stores a signal indicating the heat generation suppression mode M2 in the storing unit 7b . On the other hand, when the current time is nighttime, the controller 7 stores a signal indicating the normal mode M1 in the storing unit 7b.

For example, the controller 7 may determine whether to enter the normal mode M1 or the heat generation suppression mode M2 according to the result of detection of the ambient temperature detected by an ambient temperature detector. Specifically, when the current ambient temperature is higher than a predetermined temperature, it is expected that temperature of the battery assembly 30 is also already high, and therefore the controller 7 stores a signal indicating the heat generation suppression mode M2 in the storing unit 7b. The predetermined temperature may be 30°C or 35°C, for example. On the other hand, when the current ambient temperature is lower than the predetermined temperature, the controller 7 stores a signal indicating the normal mode M1 in the storing unit 7b.

The controller 7 may determine whether to enter the normal mode M1 or the heat generation suppression mode M2 according to the current season. Specifically, the controller 7 determines the current season based on date information. When the current season is summer, it is expected that the ambient temperature is high and the temperature of the battery assembly 30 is already high, and therefore the controller 7 stores a signal indicating the heat generation suppression mode M2 in the storing unit 7b. On the other hand, when the current season is not summer, the controller 7 stores a signal indicating the normal mode M1 in the storing unit 7b.

The controller 7 may determine whether to enter the normal mode M1 or the heat generation suppression mode M2 according to the region where the electric working machine 1 performs work. Specifically, the controller 7 determines whether the region where the electric working machine 1 performs work is a region where the ambient temperature is relatively high or not based on region information acquired via a position detector included in the electric working machine 1 or defined manually by the user. When the region where the electric working machine 1 performs work is a region where the ambient temperature is relatively high, it is expected that the temperature of the battery assembly 30 is likely to be high. Therefore, the controller 7 stores a signal indicating the heat generation suppression mode M2 in the storing unit 7b. On the other hand, when the region is not a region where the ambient temperature is high, the controller 7 stores the normal mode M1 in the storing unit 7b.

The controller 7 may determine whether to enter the normal mode M1 or the heat generation suppression mode M2 according to the cumulative operating time for which the battery assembly 30 has supplied electric current. Specifically, when the cumulative operating time of the battery assembly 30 is longer than a predetermined time, the battery assembly 30 is likely to have deteriorated. To prevent or reduce further deterioration of the battery assembly 30, the controller 7 stores a signal indicating the heat generation suppression mode M2 in the storing unit 7b. On the other hand, when the cumulative battery operating time of the battery assembly 30 is shorter than the predetermined time, the controller 7 stores a signal indicating the normal mode M1 in the storing unit 7b.

The controller 7 may determine whether to enter the normal mode M1 or the heat generation suppression mode M2 according to the recent electricity consumption (recently discharged electricity) of the electric working machine 1. Specifically, when the operation on the electric working machine 1 performed immediately before the charge control is an operation that requires large electric power, the next operation is likely to require a large amount of electricity. Therefore, the controller 7 stores a signal indicating the heat generation suppression mode M2 in the storing unit 7b so that the output from the battery assembly 30 is not restricted even immediately after charging. On the other hand, when the recent electricity consumption is small, the controller 7 determines that the next operation is unlikely to require a large amount of electricity, and stores the normal mode M1 in the storing unit 7b.

The controller 7 may determine whether to enter the normal mode M1 or the heat generation suppression mode M2 according to the working tool attached to the electric working machine 1. Specifically, when the attached working tool (hydraulic attachment) requires a large amount of electricity to operate, it is likely that large electric power will be required for the operation immediately after charging. Therefore, the controller 7 stores a signal indicating the heat generation suppression mode M2 in the storing unit 7b so that the electricity output from the battery assembly 30 is not restricted even immediately after charging. On the other hand, when the attached working tool does not require a large amount of electricity to operate, the controller 7 stores a signal indicating the normal mode M1 in the storing unit 7b.

The controller 7 may determine whether to enter the normal mode M1 or the heat generation suppression mode M2 according to the remaining charge of the battery assembly 30 at the time of start of charging. In view of the characteristics of the battery, when charging is to be performed at a constant current, it is necessary that the value of charging current output to the battery packs 31, 32 be lowered as the fully charged state is approached. Therefore, when the remaining charge of the battery assembly 30 at the time of start of charging is greater than a predetermined value (e.g., equal to or greater than 80%), the controller 7 stores a signal indicating the heat generation suppression mode M2 in the storing unit 7b. On the other hand, when the remaining charge of the battery assembly 30 is less than the predetermined value (e.g., less than 80%), the controller 7 stores a signal indicating the normal mode M1 in the storing unit 7b. As has been described, the controller 7 automatically determines the mode in which the controller 7 controls the first upper limit I_th1 that is the upper limit of the charging current, and therefore it is possible to achieve both an improvement of working efficiency and a reduction of the deterioration of the battery assembly 30.

Although the above-described example embodiments have been described based on two example modes, i.e., the normal mode M1 and the heat generation suppression mode M2, the number of modes is not limited to two, provided that the controller 7 is configured or programmed to switch between the first mode in which the controller 7 controls the charging current based on a predetermined first correspondence relationship, and the second mode in which the controller 7 controls the charging current based on a second correspondence relationship in which the first upper limits I_th are lower than in the first correspondence relationship at at least one or more temperatures. A configuration in which the predetermined first correspondence relationship is modified and the first upper limit I_th1 is changed continuously may be used.

The electric working machine 1 and the method of controlling the electric working machine 1 according to the above-described first example embodiment achieve the following effects.

(Item A1) An electric working machine 1 including a battery assembly 30, an electric actuator (electric motor) 9 to be actuated by electricity supplied by the battery assembly 30, a working device 20 to be actuated by the electric actuator 9 being driven, a temperature detector 31b, 31c, 31d, 32b, 32c, 32d to detect a temperature of the battery assembly 30, and a controller 7 configured or programmed to control, according to the temperature of the battery assembly 30 (first control temperature), a first upper limit I_th1 which is an upper limit of a charging current supplied to the battery assembly 30, wherein the controller 7 is configured or programmed to switch between (i) a first mode (normal mode M1) in which the controller 7 controls the charging current based on a first correspondence relationship in which temperatures of the battery assembly 30 (first control temperatures) and first upper limits I_th1 are associated with each other, and (ii) a second mode (heat generation suppression mode M2) in which the controller 7 controls the charging current based on a second correspondence relationship in which the first upper limits I_th1 are lower than in the first correspondence relationship at one or more of the temperatures.

With the subject-matter according to item A1, it is possible to achieve both shortening a charging time and holding down increases in the temperature of the battery according to the purpose of use. That is, since different settings of the first upper limit I_th1, which is the upper limit of the charging current, are suitably used when performing charging in a short time and when performing charging while holding down increases in the temperature of the battery assembly 30, it is possible to perform work efficiently.

(Item A2) The electric working machine 1 according to item A1, wherein the controller 7 is configured or programmed to lower the first upper limit I_th1 as the temperature of the battery assembly 30 (first control temperature) increases in each of the first mode and the second mode.

With the subject-matter according to item A2, it is possible to charge the battery assembly 30 while reducing the deterioration of the battery assembly 30.

(Item A3) The electric working machine 1 according to item A1 or A2, wherein the first upper limits I_th1 of the second mode are lower than the first upper limits I_th1 of the first mode in a first temperature range R1 of the temperatures of the battery assembly 30 (first control temperatures), and equal to or substantially equal to the first upper limits I_th1 of the first mode in a second temperature range R2 in which the temperatures of the battery assembly 30 (first control temperatures) are higher than in the first temperature range R1.

With the subject-matter of according to item A3, it is possible to achieve the following: the first upper limits I_th1 of the first mode and the first upper limits I_th1 of the second mode are equal to or substantially equal to each other in the second temperature range R2, and the first upper limits I_th1 of the first mode are significantly different from the first upper limits I_th1 of the second mode in the first temperature range R1.

(Item A4) The electric working machine 1 according to according to item A3, wherein the first upper limits I_th1 in the first temperature range R1 are constant with respect to the temperatures of the battery assembly 30 (first control temperatures) in at least one of the first mode or the second mode.

With the subject-matter according to item A4, it is possible to achieve a constant charging speed of the battery assembly 30 within a certain temperature range. Furthermore, it is possible to achieve a charge control process easily by reducing the number of switching actions to switch the electric current value.

(Item A5) The electric working machine 1 according to any one of items A1 to A4, wherein the controller 7 is configured or programmed to control an output of the working device 20 according to the temperature of the battery assembly 30 (second control temperature).

With the subject-matter according to item A5, it is possible to discharge the battery assembly 30 in a manner suitable for the characteristics in temperature of the battery assembly 30.

(Item A6) The electric working machine 1 according to any one of items A1 to A5, wherein the controller 7 is configured or programmed to control a second upper limit I_th2 which is an upper limit of a discharge current supplied from the battery assembly 30 to the electric actuator 9 according to the temperature of the battery assembly 30 (second control temperature).

With the subject-matter according to item A6, it is possible to discharge the battery assembly 30, i.e., to actuate the working device 20, while reducing the deterioration of the battery assembly 30.

(Item A7) The electric working machine 1 according to item A6, wherein the controller 7 is configured or programmed to lower the second upper limit I_th2 as the temperature of the battery assembly 30 (second control temperature) increases.

With the subject-matter according to item A7, it is possible to discharge the battery assembly 30, i.e., to actuate the working device 20, while reducing the deterioration of the battery assembly 30.

(Item A8) The electric working machine 1 according to any one of items A1 to A7, further including a switch B1, B2, B3 to switch between the first mode and the second mode.

With the subject-matter according to item A8, it is possible for a user to switch between the first mode and the second mode, making it possible to charge the battery assembly 30 in the way the user intends.

(Item A9) A method of controlling an electric working machine 1, the electric working machine 1 including a battery assembly 30, an electric actuator 9 to be actuated by electricity supplied by the battery assembly 30, a working device 20 to be actuated by the electric actuator 9 being driven, a temperature detector 31b, 31c, 31d, 32b, 32c, 32d to detect a temperature of the battery assembly 30, and a controller 7 configured or programmed to control charging of the battery assembly 30, the method including a first step including selecting a first mode or a second mode, and a second step including controlling a first upper limit I_th1 that is an upper limit of a charging current supplied to the battery assembly 30 according to the first mode or the second mode selected in the first step and the temperature of the battery assembly 30 (first control temperature), wherein the second step includes, when the first mode is selected, controlling the charging current based on a first correspondence relationship in which temperatures of the battery assembly 30 (first control temperature) and first upper limits I_th1 are associated with each other, and, when the second mode is selected, controlling the charging current based on a second correspondence relationship in which the first upper limits I_th1 are lower than in the first correspondence relationship at one or more of the temperatures.

With the subject-matter according to item A9, it is possible to achieve both shortening a charging time and holding down increases in the temperature of the battery according to the purpose of use. That is, since different settings of the first upper limit I_th1, which is the upper limit of the charging current, are suitably used when performing charging in a short time or when performing charging while holding down increases in the temperature of the battery assembly 30, it is possible to perform work efficiently.

(Item B1) An electric working machine 1 including a battery assembly 30, an electric actuator (electric motor) 9 to be actuated by electricity supplied by the battery assembly 30, a working device 20 to be actuated by the electric actuator 9 being driven, a plurality of temperature detectors 31b, 31c, 31d, 32b, 32c, 32d to each detect a temperature of the battery assembly 30, a controller 7 configured or programmed to calculate a first temperature (temperature for displaying) T_show of the battery assembly 30 based on temperatures detected by the plurality of temperature detectors 31b, 31c, 31d, 32b, 32c, 32d, and a display 60 to display the first temperature T_show calculated by the controller 7, wherein the controller 7 is configured or programmed to calculate the first temperature T_show based on a lowest temperature T_min of the temperatures detected by the plurality of temperature detectors 31b, 31c, 31d, 32b, 32c, 32d , a highest temperature T_max of the temperatures detected by the plurality of temperature detectors 31b, 31c, 31d, 32b, 32c, 32d, and a weighting value to assign weights such that a weight assigned to the lowest temperature increases as the lowest temperature decreases.

With the subject-matter according to item B1, it is possible to provide a notification indicating the temperature of the battery assembly 30 such that a user can easily understand. The user can know the temperature of the battery assembly 30 efficiently.

(Item B2) The electric working machine 1 according to item B1, wherein the controller 7 is configured or programmed to, when the lowest temperature T_min is lower than a first predetermined value th1, determine the lowest temperature T_min as the first temperature T_show, when the lowest temperature T_min is equal to or higher than a second predetermined value th2, determine the highest temperature T_max as the first temperature T_show, and, when the lowest temperature T_min is equal to or higher than the first predetermined value th1 and lower than the second predetermined value th2, calculate the first temperature T_show based on the lowest temperature T_min, the highest temperature T_max, and the weighting value.

With the subject-matter according to item B2, the value of the displayed temperature changes continuously although the value is in conformity with the charging characteristics of the battery assembly 30, making it possible for a user to know the temperature without a feeling of unnaturalness.

(Item B3) The electric working machine 1 according to item B1 or B2, wherein the weighting value includes a first weighting value $\alpha$ and a second weighting value 1-$\alpha$, the first weighting value $\alpha$ by which the lowest temperature T_min is multiplied increases as the lowest temperature T_min decreases, and the second weighting value 1-$\alpha$ by which the highest temperature T_max is multiplied increases as the lowest temperature T_min increases.

With the subject-matter according to item B3, the value of the first temperature T_show does not change drastically but changes continuously, making it possible for a user to know the temperature of the battery assembly 30 easily.

(Item B4) The electric working machine 1 according to any one of items B1 to B3, wherein the plurality of temperature detectors 31b, 31c, 31d, 32b, 32c, 32d are provided at respective different portions in or on the battery assembly 30.

With the subject-matter according to item B4, it is possible to provide a user with a notification of the appropriate temperature of the battery assembly 30 even if the temperatures in the battery assembly 30 vary from each other.

(Item B5) The electric working machine 1 according to any one of items B1 to B4, wherein the battery assembly 30 includes a plurality of battery cells, and the plurality of temperature detectors 31b, 31c, 31d, 32b, 32c, 32d are provided in or on respective different ones of the plurality of battery cells.

With the subject-matter according to item B5, it is possible to provide a user with a notification of the appropriate temperature of the battery assembly 30 even if the temperature of a plurality of battery cells included in the battery assembly 30 vary from each other.

(Item B6) The electric working machine 1 according to any one of items B1 to B5, wherein the controller 7 is configured or programmed to, when the lowest temperature T_min is lower than a first predetermined value th1, control, based on the lowest temperature T_min, at least one of a charging current during charging of the battery assembly 30 or a discharge current during discharging of the battery assembly 30, and when the highest temperature T_max is equal to or higher than a second predetermined value th2, control, based on the highest temperature T_max, at least one of the charging current or the discharge current.

With the subject-matter according to item B6, it is possible to charge and/or discharge the battery assembly 30 in a manner suitable for the temperature characteristics of the battery assembly 30.

(Item B7) The electric working machine 1 according to any one of items B1 to B6, wherein the controller 7 is configured or programmed to calculate, separately from the first temperature T_show, a second temperature for use in controlling the battery assembly 30, and, based on the second temperature, control at least one of a charging current during charging of the battery assembly 30 or a discharge current during discharging of the battery assembly 30.

With the subject-matter according to item B7, since the method of calculating the temperature to be displayed on the display 60 and the method of calculating the temperature for use in controlling the electric working machine 1 are caused to differ from each other, the information dominant for determination of the charging time is displayed with priority. This makes it possible for a user to easily determine an estimate of the charging time.

(Item B8) The electric working machine 1 according to item 7, wherein an upper limit of the charging current and an upper limit of the discharge current are defined such that upper limits of the charging current correspond to temperatures of the battery assembly 30 and upper limits of the discharge current correspond to the temperatures of the battery assembly 30, and the controller 7 is configured or programmed to calculate, as the second temperature, a temperature corresponding to a lower one of an upper limit corresponding to the highest temperature $T\_max$ or an upper limit corresponding to the lowest temperature $T\_min$.

With the subject-matter according to item B8, even if the temperature of the battery assembly 30 is relatively low or relatively high, it is possible to charge and/or discharge the battery assembly 30 in a manner suitable for the temperature characteristics of the battery assembly 30 more reliably.

(Item B9) A method of controlling an electric working machine 1, the electric working machine 1 including a battery assembly 30, an electric actuator (electric motor) 9 to be actuated by electricity supplied by the battery assembly 30, a working device 20 to be actuated by the electric actuator 9 being driven, a plurality of temperature detectors 31b, 31c, 31d, 32b, 32c, 32d to each detect a temperature of the battery assembly 30, a display 60 to display the temperature of the battery assembly 30, and a controller 7 configured or programmed to calculate a first temperature $T\_show$ to be displayed by the display 60, the method including the steps of determining a lowest temperature $T\_min$ and a highest temperature $T\_max$ of temperatures detected by the plurality of temperature detectors 31b, 31c, 31d, 32b, 32c, 32d, and calculating the first temperature $T\_show$ based on the lowest temperature $T\_min$, the highest temperature $T\_max$, and a weighting value to assign weights such that a weight assigned to the lowest temperature $T\_min$ increases as the lowest temperature $T\_min$ decreases.

With the subject-matter according to item B9, it is possible to provide a notification of the temperature of the battery assembly 30 such that a user can easily understand. The user can know the temperature of the battery assembly 30 efficiently.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

While example embodiments and variations have been described based on the case where the present invention is applied to the electric working machines 1 such as backhoes, the application of the present invention is not limited to such cases. For example, the present invention may be applied to other construction machines such as wheel loaders, compact track loaders, skid-steer loaders and the like. The present invention may also be applied to agricultural machines such as tractors, combines, rice transplanters, mowers and the like.

Reference Signs List

| | |
|---|---|
| 1 | Electric working machine |
| 7 | Controller |
| 9 | Electric actuator (electric motor) |
| 20 | Working device |
| 30 | Battery assembly |
| 31 | Battery pack |
| 31b | Temperature detector |
| 31c | Temperature detector |
| 31d | Temperature detector |
| 32 | Battery pack |
| 32b | Temperature detector |
| 32c | Temperature detector |
| 32d | Temperature detector |
| M1 | First mode (normal mode) |
| M2 | Second mode (heat generation suppression mode) |
| I_th1 | First upper limit (upper limit of charging current) |

I_th2     Second upper limit (upper limit of discharge current)
R1     First temperature range
R2     Second temperature range
B1     Switch (radio button)
B2     Switch (radio button)
B3     Switch (determination button)

**Claims**

1. An electric working machine comprising:

   a battery assembly;
   an electric actuator to be actuated by electricity supplied by the battery assembly;
   a working device to be actuated by the electric actuator being driven;
   a temperature detector to detect a temperature of the battery assembly; and
   a controller configured or programmed to control, according to the temperature of the battery assembly, a first upper limit which is an upper limit of a charging current supplied to the battery assembly; wherein
   the controller is configured or programmed to switch between (i) a first mode in which the controller controls the charging current based on a first correspondence relationship in which temperatures of the battery assembly and first upper limits are associated with each other, and (ii) a second mode in which the controller controls the charging current based on a second correspondence relationship in which the first upper limits are lower than in the first correspondence relationship at one or more of the temperatures.

2. The electric working machine according to claim 1, wherein the controller is configured or programmed to lower the first upper limit as the temperature of the battery assembly increases in each of the first mode and the second mode.

3. The electric working machine according to claim 1, wherein
   the first upper limits of the second mode are:

   lower than the first upper limits of the first mode in a first temperature range of the temperatures of the battery assembly; and
   equal to or substantially equal to the first upper limits of the first mode in a second temperature range in which the temperatures of the battery assembly are higher than in the first temperature range.

4. The electric working machine according to claim 3, wherein the first upper limits in the first temperature range are constant with respect to the temperatures of the battery assembly in at least one of the first mode or the second mode.

5. The electric working machine according to claim 1, wherein the controller is configured or programmed to control an output of the working device according to the temperature of the battery assembly.

6. The electric working machine according to claim 1, wherein the controller is configured or programmed to control a second upper limit which is an upper limit of a discharge current supplied from the battery assembly to the electric actuator according to the temperature of the battery assembly.

7. The electric working machine according to claim 6, wherein the controller is configured or programmed to lower the second upper limit as the temperature of the battery assembly increases.

8. The electric working machine according to claim 1, further comprising a switch to switch between the first mode and the second mode.

9. A method of controlling an electric working machine, the electric working machine including:

   a battery assembly;
   an electric actuator to be actuated by electricity supplied by the battery assembly;
   a working device to be actuated by the electric actuator being driven;
   a temperature detector to detect a temperature of the battery assembly; and
   a controller configured or programmed to control charging of the battery assembly;
   the method comprising:

a first step including selecting a first mode or a second mode; and

a second step including controlling a first upper limit that is an upper limit of a charging current supplied to the battery assembly according to the first mode or the second mode selected in the first step and the temperature of the battery assembly; wherein

the second step includes, when the first mode is selected, controlling the charging current based on a first correspondence relationship in which temperatures of the battery assembly and first upper limits are associated with each other, and, when the second mode is selected, controlling the charging current based on a second correspondence relationship in which the first upper limits are lower than in the first correspondence relationship at one or more of the temperatures.

Fig.1

Fig.2

# Fig.3

Start

S31 ── Charging mode? ── Yes ──→ A

No

S32 ── Detect temperature of battery unit

S33 ── Acquire second upper limit I_th2

S34 ── Control working device based on I_th2

S35 ── Continue? ── Yes

No

End

# Fig.4

First control temperature [°C]

D1

| First control temperature | First upper limit I_th1 |
|---|---|
| T0 | I_max |
| ... | ... |
| T1 | I_max |
| ... | ... |
| T1a | I_max |
| ... | ... |
| T2 | I_max |
| ... | ... |
| T3 | I_max |
| ... | ... |
| T4 | I3 |
| ... | ... |
| T5 | I2 |
| ... | ... |
| T_limit | I1 |

D2

| First control temperature | First upper limit I_th1 |
|---|---|
| T0 | I_max |
| ... | ... |
| T1 | I4 |
| ... | ... |
| T1a | I4 |
| ... | ... |
| T2 | I4 |
| ... | ... |
| T3 | I4 |
| ... | ... |
| T4 | I3 |
| ... | ... |
| T5 | I2 |
| ... | ... |
| T_limit | I1 |

Fig.5

# Fig.6

G1

Mg1

Charging mode setting

B1 — Normal — Mg2

B2 — Heat generation suppression — Mg3

OK

B3

# Fig.7

A

S71

Switch mode

S72

Detect temperature of
battery unit

S73

Acquire first upper
limit I_th1

S74

Charge

S75

Continue charging? — Yes

No

End

# Fig.8A

# Fig.8B

# Fig.9

```
        ┌─────────────┐
        │    Start    │
        └─────────────┘
               │
S91            ▼
     ┌──────────────────────────┐
     │   Acquire temperature    │
     └──────────────────────────┘
               │
S92            ▼
     ┌──────────────────────────┐
     │ Determine T_min and T_max│
     └──────────────────────────┘
               │
S93            ▼
     ┌──────────────────────────┐
     │  Determine first weighting│
     │       value  α           │
     └──────────────────────────┘
               │
S94            ▼
     ┌──────────────────────────┐
     │      Calculate first     │
     │    temperature T_show    │
     └──────────────────────────┘
               │
S95            ▼
     ┌──────────────────────────┐
     │        Display           │
     └──────────────────────────┘
               │
               ▼
        ┌─────────────┐
        │     End     │
        └─────────────┘
```

# Fig.10A

# Fig.10B

Fig.11

EP 4 737 649 A1

# Fig.12

## INTERNATIONAL SEARCH REPORT

| International application No. |
|---|
| **PCT/JP2024/018637** |

**A. CLASSIFICATION OF SUBJECT MATTER**

*E02F 9/00*(2006.01)i; *H01M 10/44*(2006.01)i; *H01M 10/48*(2006.01)i; *H02J 7/10*(2006.01)i
FI:  E02F9/00 C; H02J7/10 L; H02J7/10 Q; H01M10/48 P; H01M10/48 301; H01M10/44 P

According to International Patent Classification (IPC) or to both national classification and IPC

**B. FIELDS SEARCHED**

Minimum documentation searched (classification system followed by classification symbols)

E02F9/00; H01M10/44; H01M10/48; H02J7/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/270010 A1 (KUBOTA CORPORATION) 29 December 2022 (2022-12-29) paragraphs [0004], [0017], [0026]-[0027], [0052], [0075]-[0092] | 1-2, 5-9 |
| A | entire text, all drawings | 3-4 |
| Y | JP 2020-115715 A (TOYOTA JIDOSHA KABUSHIKI KAISHA) 30 July 2020 (2020-07-30) paragraphs [0110]-[0122] | 1-2, 5-9 |
| Y | JP 2009-114653 A (HITACHI CONSTRUCTION MACHINERY CO., LTD.) 28 May 2009 (2009-05-28) paragraph [0032] | 5 |
| Y | JP 2008-69516 A (HITACHI CONSTRUCTION MACHINERY CO., LTD.) 27 March 2008 (2008-03-27) paragraph [0039] | 6-7 |
| A | WO 2015/015647 A1 (KOMATSU LTD.) 05 February 2015 (2015-02-05) entire text, all drawings | 1-9 |

☐ Further documents are listed in the continuation of Box C.    ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **28 June 2024** | **09 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/018637**

| Patent document cited in search report | | | Publication date (day/month/year) | Patent family member(s) | | | Publication date (day/month/year) |
|---|---|---|---|---|---|---|---|
| WO | 2022/270010 | A1 | 29 December 2022 | US | 2024/0083265 | A1 | |
| | | | | paragraphs [0004], [0036]-[0039], [0054]-[0056], [0091], [0129]-[0155] | | | |
| JP | 2020-115715 | A | 30 July 2020 | US | 2020/0231060 | A1 | |
| | | | | paragraphs [0126]-[0138] | | | |
| | | | | EP | 3683084 | A1 | |
| | | | | CN | 111439166 | A | |
| JP | 2009-114653 | A | 28 May 2009 | (Family: none) | | | |
| JP | 2008-69516 | A | 27 March 2008 | (Family: none) | | | |
| WO | 2015/015647 | A1 | 05 February 2015 | US | 2016/0221454 | A1 | |
| | | | | JP | 5642318 | B1 | |
| | | | | CN | 104507735 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021080703 A